# EUROPEAN PATENT APPLICATION

(11) **EP 4 804 471 A1**
(43) Date of publication of application: **09.09.2026**
(21) Application number: 24902481.1
(22) Date of filing: 14.11.2024
(51) Int. Cl.: H04L 27/26

(54) **SIGNAL MODULATION METHOD AND RELATED APPARATUS**

(30) Priority: 13.12.2023 CN 202311717738
(71) Applicant: Huawei Technologies Co., Ltd., Shenzhen, Guangdong 518129 (CN)
(72) Inventor: WEN, Shan, Shenzhen, Guangdong 518129 (CN); HUANG, Huang, Shenzhen, Guangdong 518129 (CN); MA, Qianli, Shenzhen, Guangdong 518129 (CN)
(74) Representative: Gill Jennings & Every LLP
(86) International application number: PCT/CN2024/131951
(87) International publication number: WO 2025/124058

(57) **Abstract**

This application provides a signal modulation method and a related apparatus. The method includes: obtaining a first symbol sequence, and performing single-carrier modulation on the first symbol sequence, where a phase difference between two adjacent symbols in the first symbol sequence is 90°, the single-carrier modulation includes spectrum adjustment that is based on a first scaling factor, and frequency domain spectrum shaping FDSS, and the spectrum adjustment includes spectrum compression; and determining a signal generated by performing the single-carrier modulation on the first symbol sequence. In the method, the single-carrier modulation is performed on the first symbol sequence in which the phase difference between the two adjacent symbols is 90°, to provide a single-carrier modulation scheme in which spectrum compression is performed in frequency domain, improve spectral efficiency, and generate a single-carrier signal with a low PAPR.

## Description

This application claims priority to Chinese Patent Application No. 202311717738.5, filed with the China National Intellectual Property Administration on December 13, 2023 and entitled "SIGNAL MODULATION METHOD AND RELATED APPARATUS", which is incorporated herein by reference in its entirety.

### TECHNICAL FIELD

This application relates to the field of wireless communication technologies, and in particular, to a signal modulation method and a related apparatus.

### BACKGROUND

In a 5th generation (5th generation, 5G) communication system, orthogonal frequency division multiplexing (orthogonal frequency division multiplexing, OFDM) modulation is used for downlink signals, and OFDM modulation and discrete Fourier transform spreading orthogonal frequency division multiplexing (discrete Fourier transform spreading OFDM, DFT-s-OFDM) modulation are used for uplink signals. DFT-s-OFDM modulation is used to perform additional discrete Fourier transform (discrete Fourier transform, DFT) processing prior to an OFDM modulation process. Through this operation, DFT-s-OFDM signals exhibit characteristics of single-carrier modulated signals, and have a peak to average power ratio (peak to average power ratio, PAPR) far lower than that of multi-carrier modulated signals such as OFDM modulated signals.

Single-carrier modulation includes performing shaping filtering processing on a modulated input symbol sequence in time domain. In a case of no transmission performance loss, a minimum bandwidth of a filter may be equal to a bandwidth of a symbol sequence (that is, a spectrum width of a frequency domain signal corresponding to the symbol sequence). The width of the filter is equal to a transmission bandwidth (transmission bandwidth) or a scheduling bandwidth. During actual application, the bandwidth of the filter is typically higher than a bandwidth of the modulated input symbol sequence. Although such a design causes a decrease in spectral efficiency, it also brings many benefits, one of which is that a PAPR of a single-carrier signal is reduced.

Single-carrier modulation may also be equivalently implemented in frequency domain. A frequency domain implementation scheme is similar to DFT-s-OFDM modulation. First, a time domain modulated input symbol sequence is converted into a frequency domain signal through DFT. Time domain shaping filtering in single-carrier modulation is equivalent to performing windowing processing on the frequency domain signal in frequency domain, which may also be referred to as frequency domain spectrum shaping (frequency domain spectrum shaping, FDSS). If the bandwidth of the filter is higher than the bandwidth of the modulated input symbol sequence, spectrum extension needs to be performed on the frequency domain signal first, and then windowing processing is performed. An extended bandwidth is consistent with the bandwidth of the filter.

However, for some specific symbol sequences, frequency domain signals corresponding to the specific symbol sequences have higher bandwidths than the bandwidth of the filter and have redundancy. In conventional technologies, there is no single-carrier modulation scheme that supports this case to achieve a good trade-off between spectral efficiency and the PAPR.

### SUMMARY

Embodiments of this application provide a signal modulation method and a related apparatus. Single-carrier modulation is performed on a first symbol sequence in which a phase difference between two adjacent symbols is 90°, to provide a single-carrier modulation scheme in which spectrum compression is performed in frequency domain, improve spectral efficiency, and generate a single-carrier signal with a low PAPR.

According to a first aspect, this application provides a signal modulation method, applied to a first device. The first device may be a terminal device or a chip in the terminal device, or may be a network device or a chip in the network device. The method includes: obtaining a first symbol sequence, and performing single-carrier modulation on the first symbol sequence, where a phase difference between two adjacent symbols in the first symbol sequence is 90°, the single-carrier modulation includes spectrum adjustment that is based on a first scaling factor, and frequency domain spectrum shaping FDSS, and the spectrum adjustment includes spectrum compression; and determining a signal generated by performing the single-carrier modulation on the first symbol sequence.

In this embodiment of this application, a manner of determining the first scaling factor corresponding to the first symbol sequence is provided, and descriptions of spectrum adjustment in a scenario in which bandwidth compression is performed based on the first scaling factor on the first symbol sequence in which the phase difference between the two adjacent symbols is 90° are added, to improve spectral efficiency, and generate a single-carrier signal with a low PAPR.

In some possible implementations, the first scaling factor is determined based on a bandwidth of the first symbol sequence and a transmission bandwidth of the signal.

In some possible implementations, the first scaling factor satisfies a formula below: ${β}_{1} = \frac{transmission bandwidth of the signal}{bandwidth of the first symbol sequence} - 1 ;$ or
the first scaling factor satisfies a formula below: ${α}_{1} = \frac{transmission bandwidth of the signal - bandwidth of the first symbol sequence}{transmission bandwidth of the signal} ,$ where
*β*₁ and *α*₁ each represent the first scaling factor.

In some possible implementations, the first scaling factor satisfies a formula below: $β = \frac{transmission bandwidth of the signal}{half the bandwidth of the first symbol sequence} - 1 ;$ or
the first scaling factor satisfies a formula below: $α = \frac{transmission bandwidth - half the bandwidth of the first symbol sequence}{transmission bandwidth of the signal} ,$ where
*β* and *α* each represent the first scaling factor.

In the foregoing two formulas for calculating the first scaling factor, the former manner is defined based on the bandwidth of the first symbol sequence as a reference, and the latter manner is defined based on a redundancy-free bandwidth of the first symbol sequence (that is, a bandwidth of a non-redundant part in the frequency domain signal corresponding to the first symbol sequence, which is equal to half the bandwidth of the first symbol sequence) as a reference. Advantages of the former manner lie in its intuitive definition and calculation convenience, that is, calculation is performed based on a bandwidth value (the bandwidth of the first symbol sequence) before the spectrum adjustment and a bandwidth value (the transmission bandwidth) after the spectrum adjustment. When a same quantity of bits are carried, the redundancy-free bandwidth of the first symbol sequence is the same as a bandwidth of a quadrature amplitude modulation QAM symbol sequence defined in 5G new radio NR. Therefore, when the latter manner is used, a network side may indicate the first scaling factor by using existing signaling or an existing field or protocol indicating a bandwidth extension factor of the QAM symbol sequence, to reduce protocol modification content.

In some possible implementations, the first scaling factor satisfies a first condition below:
a maximum value of *β* is 1, 3, or 7; or
a maximum value of *α* is 0.5, 0.75, or 0.875; or
a minimum value of *β* is 0; or
a minimum value of *α* is 0.

In some possible implementations, the first scaling factor satisfies a second condition below:
a maximum value of *β*₁ is 0, 1, or 3; or
a maximum value of *α*₁ is 0, 0.5, or 0.75; or
a minimum value of *β*₁ is -0.5; or
a minimum value of *α*₁ is -1.

Bandwidth extension is beneficial for the single-carrier signal generated through modulation to have the lower PAPR but at the cost of reducing the spectral efficiency. The maximum value of the first scaling factor can be designed to achieve a good trade-off between the PAPR and the spectral efficiency.

In some possible implementations, the spectrum adjustment that is based on the first scaling factor, and the FDSS include: replicating, c times, a first frequency domain signal corresponding to the first symbol sequence, to obtain a second frequency domain signal whose length is (c+1)*M, where a value of c is related to a value of *β*, and M is a length of the first frequency domain signal; and performing the FDSS by using M/2*(1+*β*) sample values in the middle of the second frequency domain signal as an input signal of the FDSS, to obtain an output signal of the FDSS.

In some possible implementations, the spectrum adjustment that is based on the first scaling factor, and the FDSS include: replicating, c1 times, a first frequency domain signal corresponding to the first symbol sequence, to obtain a third frequency domain signal whose length is (c1+1)*M, where a value of c1 is related to a value of *β*₁, and M is a length of the first frequency domain signal; and performing the FDSS by using M*(1+*β*₁) sample values in the middle of the third frequency domain signal as an input signal of the FDSS, to obtain an output signal of the FDSS.

Spectrum adjustment is performed by using the method, to be specific, a signal whose length is M*(1+*β*₁) or M/2*(1+*β*) is generated based on a frequency domain signal whose length is M and that corresponds to the first symbol sequence, and is used as an input of FDSS, so that during bandwidth compression, it is ensured that a redundant signal is compressed, a wanted signal is not compressed, and signal demodulation performance is lossless. In addition, such an FDSS input signal design enables the generated single-carrier modulated signal to have the low PAPR.

In some possible implementations, the first symbol sequence is a second symbol sequence or a third symbol sequence, the second symbol sequence is the first symbol sequence including only a pilot, the third symbol sequence is the first symbol sequence including communication data, a demodulation reference signal DMRS is a signal generated by performing the single-carrier modulation on the second symbol sequence, a data signal is a signal generated by performing the single-carrier modulation on the third symbol sequence, a transmission bandwidth of the DMRS is the same as a transmission bandwidth of the data signal, and a bandwidth of the second symbol sequence is equal to a bandwidth of the third symbol sequence.

In some possible implementations, the second symbol sequence is a pi/2-binary phase shift keying (pi/2-BPSK) symbol sequence.

In this embodiment of this application, the single-carrier modulation that is the same as that of the communication data is performed on the pilot, so that a PAPR of the DMRS is not higher than a PAPR of the data signal. In this way, accurate channel estimation can be obtained from the DMRS, to ensure demodulation performance of the data signal.

In some possible implementations, when the first device is a terminal device or a chip in the terminal device, the method further includes: receiving a first message; or when the first device is a network device or a chip in the network device, the method further includes: sending the first message, where the first message carries at least two of transmission bandwidth information of the signal, length information of the first symbol sequence, or information about the first scaling factor.

In some possible implementations, the first message is one of the following: downlink control information DCI, radio resource control RRC signaling, or a medium access control-control element MAC-CE.

According to a second aspect, this application provides a communication apparatus. The apparatus includes: a processing unit, configured to obtain a first symbol sequence, and perform single-carrier modulation on the first symbol sequence, where a phase difference between two adjacent symbols in the first symbol sequence is 90°, the single-carrier modulation includes spectrum adjustment that is based on a first scaling factor, and frequency domain spectrum shaping FDSS, and the spectrum adjustment includes spectrum compression. The processing unit is further configured to determine a signal generated by performing the single-carrier modulation on the first symbol sequence.

In some possible implementations, the first scaling factor is determined based on a bandwidth of the first symbol sequence and a transmission bandwidth of the signal.

In some possible implementations, the first scaling factor satisfies a formula below: ${β}_{1} = \frac{transmission bandwidth of the signal}{bandwidth of the first symbol sequence} - 1 ;$ or
the first scaling factor satisfies a formula below: ${α}_{1} = \frac{transmission bandwidth of the signal - bandwidth of the first symbol sequence}{transmission bandwidth of the signal} ,$ where
*β*₁ and *α*₁ each represent the first scaling factor.

In some possible implementations, the first scaling factor satisfies a formula below: $β = \frac{transmission bandwidth of the signal}{half the bandwidth of the first symbol sequence} - 1 ;$ or
the first scaling factor satisfies a formula below: $α = \frac{transmission bandwidth - half the bandwidth of the first symbol sequence}{transmission bandwidth of the signal} ,$ where
*β* and *α* each represent the first scaling factor.

In some possible implementations, the first scaling factor satisfies a first condition below:
a maximum value of *β* is 1, 3, or 7; or
a maximum value of *α* is 0.5, 0.75, or 0.875; or
a minimum value of *β* is 0; or
a minimum value of *α* is 0.

In some possible implementations, the first scaling factor satisfies a second condition below:
a maximum value of *β*₁ is 0, 1, or 3; or
a maximum value of *α*₁ is 0, 0.5, or 0.75; or
a minimum value of *β*₁ is -0.5; or
a minimum value of *α*₁ is -1.

Bandwidth extension is beneficial for the single-carrier signal generated through modulation to have the lower PAPR but at the cost of reducing the spectral efficiency. The maximum value of the first scaling factor can be designed to achieve a good trade-off between the PAPR and the spectral efficiency.

In some possible implementations, the spectrum adjustment that is based on the first scaling factor, and the FDSS include: replicating, c times, a first frequency domain signal corresponding to the first symbol sequence, to obtain a second frequency domain signal whose length is (c+1)*M, where a value of c is related to a value of *β*, and M is a length of the first frequency domain signal; and performing the FDSS by using M/2*(1+*β*) sample values in the middle of the second frequency domain signal as an input signal of the FDSS, to obtain an output signal of the FDSS.

In some possible implementations, the spectrum adjustment that is based on the first scaling factor, and the FDSS include: replicating, c1 times, a first frequency domain signal corresponding to the first symbol sequence, to obtain a third frequency domain signal whose length is (c1+1)*M, where a value of c1 is related to a value of *β*₁, and M is a length of the first frequency domain signal; and performing the FDSS by using M*(1+*β*₁) sample values in the middle of the third frequency domain signal as an input signal of the FDSS, to obtain an output signal of the FDSS.

In some possible implementations, the first symbol sequence is a second symbol sequence or a third symbol sequence, the second symbol sequence is the first symbol sequence including only a pilot, the third symbol sequence is the first symbol sequence including communication data, a demodulation reference signal DMRS is a signal generated by performing the single-carrier modulation on the second symbol sequence, a data signal is a signal generated by performing the single-carrier modulation on the third symbol sequence, a transmission bandwidth of the DMRS is the same as a transmission bandwidth of the data signal, and a bandwidth of the second symbol sequence is equal to a bandwidth of the third symbol sequence.

In some possible implementations, the second symbol sequence is a pi/2-binary phase shift keying (pi/2-BPSK) symbol sequence.

In some possible implementations, the method further includes: receiving a first message or sending the first message, where the first message carries at least two of transmission bandwidth information, length information of the first symbol sequence, or information about the first scaling factor.

In some possible implementations, the first message is one of the following: downlink control information DCI, radio resource control RRC signaling, or a medium access control-control element MAC-CE.

According to a third aspect, this application provides a communication device. The communication device includes a processor, and the processor is coupled to a memory. When the processor executes a computer program or instructions in the memory, the method in any one of the implementations of the first aspect is performed.

Optionally, the apparatus further includes the memory.

Optionally, the apparatus further includes a communication interface, and the processor is coupled to the communication interface.

Optionally, there are one or more processors, and there are one or more memories.

Optionally, the memory may be integrated with the processor, or the memory and the processor are disposed separately.

Optionally, the transceiver may include a transmitter (transmitter machine) and a receiver (receiver machine).

In an implementation, the communication device is a terminal device, or the communication device is a network device. When the communication device is a terminal device or a network device, the communication interface may be a transceiver or an input/output interface. Optionally, the transceiver may be a transceiver circuit. Optionally, the input/output interface may be an input/output circuit.

In another implementation, the communication device is a chip or a chip system. When the apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a fourth aspect, this application provides a communication system. The communication system includes the communication apparatus in the second aspect.

According to a fifth aspect, this application provides a computer program product. The computer program product includes a computer program (which may also be referred to as code or instructions). When the computer program is run, a computer is enabled to perform the method in any one of the possible implementations of the first aspect.

According to a sixth aspect, this application provides a computer-readable storage medium. The computer-readable medium stores a computer program (which may also be referred to as code or instructions). When the computer program is run on a computer, the computer is enabled to perform the method in any one of the possible implementations of the first aspect.

According to a seventh aspect, this application further provides a circuit, including a processor and an interface, configured to execute a computer program or instructions stored in a memory, to perform the method in any one of the possible implementations of the first aspect.

### BRIEF DESCRIPTION OF DRAWINGS

FIG. 1 is a diagram of an architecture of a communication system to which embodiments of this application are applied;
FIG. 2 is an implementation flowchart of an OFDM system according to an embodiment of this application;
FIG. 3 is a diagram of an SC modulation process and a frequency domain implementation of the process according to an embodiment of this application;
FIG. 4 is a diagram of DFT-s-OFDM modulation including frequency domain preprocessing according to an embodiment of this application;
FIG. 5 is a diagram of a bandwidth extension manner and FDSS according to an embodiment of this application;
FIG. 6 is a block diagram of a single-carrier frequency domain equalization processing procedure according to an embodiment of this application;
FIG. 7 is a diagram in which a frequency response varies with a frequency for different roll-off according to an embodiment of this application;
FIG. 8 is a diagram of a PAPR of a QPSK DFT-s-OFDM signal combined with FDSS according to an embodiment of this application;
FIG. 9A and FIG. 9B are diagrams of splitting a complex constellation symbol according to an embodiment of this application;
FIG. 10A is a flowchart of a signal modulation method according to an embodiment of this application;
FIG. 10B is a diagram of PAPRs corresponding to different first scaling factors according to an embodiment of this application;
FIG. 10C(a) to FIG. 10C(c) are diagrams of an FDSS process according to an embodiment of this application;
FIG. 10D(a) to FIG. 10D(c) are diagrams of an FDSS process according to an embodiment of this application;
FIG. 10E is a diagram of PAPRs corresponding to different first scaling factors according to an embodiment of this application;
FIG. 11 is a diagram of a structure of a communication apparatus according to an embodiment of this application; and
FIG. 12 is a diagram of a hardware structure of a communication apparatus according to an embodiment of this application.

### DESCRIPTION OF EMBODIMENTS

The following describes embodiments of the present invention with reference to the accompanying drawings in embodiments of the present invention.

In the specification, claims, and accompanying drawings of this application, the terms "first", "second", "third", "fourth" and the like are intended to distinguish between different objects but do not indicate a particular order. In addition, the terms "include", "have", and any other variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

"A plurality of" means two or more. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. "At least one of the following" or a similar expression thereof represents any combination of the listed items. For example, at least one of A, B, and (or) C may represent the following cases: Only A exists, only B exists, only C exists, both A and B exist, both B and C exist, both A and C exist, and both A, B, and C exist. A, B, and C may be singular or plural.

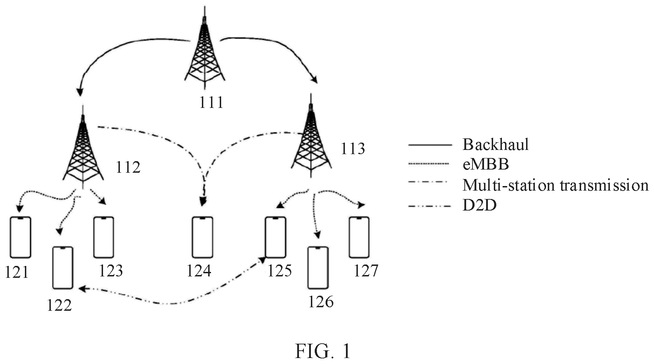

Embodiments of this application may be applied to various communication systems, for example, a 5th generation (5th generation, 5G) system, a new radio (New radio, NR) system, a satellite communication system, and a long term evolution (long term evolution, LTE) system. The present invention may be further applied to a future communication system, for example, a 6th generation mobile communication system. The present invention may be further applied to a device to device (device to device, D2D) communication system, a vehicle-to-everything (vehicle-to-everything, V2X) communication system, a machine to machine (machine to machine, M2M) communication system, a machine type communication (machine type communication, MTC) system, and an internet of things (internet of things, IoT) communication system, or another communication system. FIG. 1 is a diagram of an architecture of a communication system to which embodiments of this application are applied. As shown in FIG. 1, the wireless communication system may include at least one network device, for example, a network device 111, a network device 112, and a network device 113 shown in FIG. 1. The wireless communication system may further include at least one terminal device, for example, a terminal device 121, a terminal device 122, a terminal device 123, a terminal device 124, a terminal device 125, a terminal device 126, and a terminal device 127 shown in FIG. 1. The network device may communicate with the terminal device. For example, in multi-station transmission shown in FIG. 1, the network device 112 may communicate with the terminal device 121, the terminal device 122, and the terminal device 123. For another example, in enhanced mobile broadband (enhanced mobile broadband, eMBB) transmission shown in FIG. 1, the network device 112 and the network device 113 may communicate with the terminal device 124. Network devices may also communicate with each other. For example, in backhaul shown in FIG. 1, the network device 111 may communicate with the network device 112 and the network device 113. Terminal devices may also communicate with each other. For example, in D2D transmission shown in FIG. 1, the terminal device 122 may communicate with the terminal device 125.

It should be understood that FIG. 1 is merely an example for description, and this application is not limited thereto. This application is applicable to any communication scenario in which a transmit-side device communicates with a receive-side device. It should be further understood that a communication device (for example, the transmit-side device and the receive-side device) in this application may be a network device, or may be a terminal device. For example, the transmit-side device mentioned in this application may be a terminal device, and the receive-side device may be a network device. For another example, the transmit-side device mentioned in this application may be a network device, and the receive-side device may be a terminal device. For another example, both the transmit-side device and the receive-side device mentioned in this application may be terminal devices. For another example, both the transmit-side device and the receive-side device mentioned in this application may be network devices.

The terminal device in the communication system may be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may be a device that provides voice/data connectivity for users, for example, a handheld device or a vehicle-mounted device that has a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in autonomous driving (autonomous driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device, another processing device connected to a wireless modem, the wearable device, a terminal device in a 5G network, a terminal device in a future evolved public land mobile communication network (public land mobile network, PLMN), or the like. This is not limited in embodiments of this application. In internet of vehicles communication, a communication terminal mounted on a vehicle is a terminal device, and a road side unit (road side unit, RSU) may also be used as a terminal device. A communication terminal mounted on an uncrewed aerial vehicle may also be considered as a terminal device.

The terminal device may alternatively be a wearable device. The wearable device may also be referred to as a wearable intelligent device, and is a generic term for wearable devices developed by intelligently designing daily wearables by using a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data interaction, and cloud interaction. In a broad sense, wearable intelligent devices include a full-featured and large-size device that can implement complete and partial functions without depending on a smartphone, for example, a smart watch or smart glasses, and a device that focuses on only one type of application function and needs to work with another device such as a smartphone, for example, various smart bands or smart jewelry for physical sign monitoring.

The terminal device may alternatively be a terminal device in an internet of things (internet of things, IoT) system. The IoT is an important part of the development of future information technologies, and a main technical characteristic of the IoT is to connect things to networks by using communication technologies, to implement an intelligent network with human-machine interconnection and thing-thing interconnection.

The network device in the communication system may be a device that can communicate with the terminal device. The network device may also be referred to as an access network device or a radio access network device. For example, the network device may be a base station. The network device may be a radio access network (radio access network, RAN) node (or device) that connects the terminal device to a wireless network. The base station may cover following various names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB (master eNodeB, MeNB), a secondary eNodeB (secondary eNodeB, SeNB), a multi-standard radio (multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that functions as a base station in D2D, V2X, and M2M communication, a network side device in a 6G network, a device that functions as a base station in a future communication system, or the like. The base station may support networks using a same access technology or different access technologies. A specific technology and a specific device form that are used for the network device are not limited in the present invention.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

The network device and the terminal device may be deployed on land, including an indoor or outdoor device, a hand-held device, or a vehicle-mounted device; may be deployed on water; or may be deployed on an airplane, a balloon, and a satellite in the air. A scenario in which the network device and the terminal device are located is not limited in the present invention.

The following describes conventional technologies in this application with reference to the figures.

In a radio system, a medium for propagating a signal from a transmitter to a receiver is referred to as a channel. Multipath is a propagation phenomenon that causes a radio signal to arrive at a receiver over two or more paths. Because a plurality of copies of these transmitted signals propagate at different distances, the transmitted signals arrive at the receiver at different time points. A difference between the time points at which the signal arrives at the receive side over different paths is referred to as delay spread (delay spread, DS). A time difference between arrival of a 1^{st} path component of the signal and arrival of a last path component (to arrive over another path) is referred to as maximum delay spread (maximum DS, MDS).

If a signal is received at given time and then a copy of the signal is received a fraction of a second later, information is "blurred" due to superposition of the signals in time. As MDS increases, quality of the received signal degrades, and eventually communication fails (that is, the transmitted signal cannot be demodulated correctly), even when a signal level is higher than a sensitivity level of the receiver.

In a signal transmission process, a corresponding communication link is: to-be-sent data → baseband signal processing on a transmit side → radio frequency signal processing on the transmit side → physical channel → radio frequency signal processing on a receive side → baseband signal processing on the receive side → demodulated data.

A process of baseband signal processing on the transmit side includes: input bit stream → bit mapping (bit modulation) → symbol (data sequence) → symbol modulation → signal. A symbol modulation method is, for example, OFDM modulation.

### 1. OFDM technology

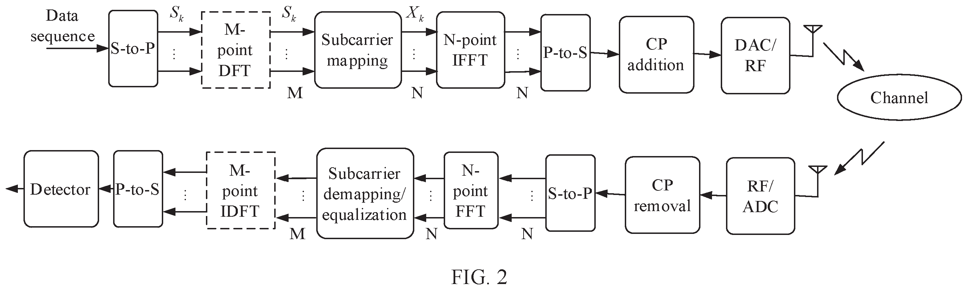

FIG. 2 is an implementation flowchart of an OFDM system according to an embodiment of this application. As shown in FIG. 2, serial to parallel (serial to parallel, s-to-p) conversion is used to convert M consecutive data symbols into an *M*-dimensional data block ***S**ₖ =* [*Sₖ*[0], *Sₖ*[1]*,* ··· *, Sₖ*[*M -* 1]]^{T}, and a subscript *k* is an OFDM symbol sequence number. Through subcarrier mapping, *M* pieces of data carried in ***S**ₖ* are modulated to *M* subcarriers in *N* subcarriers, and remaining (*N - M*) subcarriers may be understood as being modulated with 0. *N*-point inverse fast Fourier transform (inverse fast Fourier transform, IFFT) is performed on an *N*-dimensional data vector **X***ₖ* to obtain a group of *N* complex time domain samples **x***ₖ* = [*xₖ*[0], *xₖ*[1], ··· *, xₖ*[*N* - 1]]^{T}.

A next important operation of OFDM modulation is to insert a guard field at a start position of each OFDM symbol to eliminate inter-symbol interference (inter-symbol interference, ISI) caused by multipath propagation. The guard field is obtained by adding a cyclic prefix (cyclic prefix, CP) at the start of the symbol. A specific implementation is that last *G* samples of **x***ₖ* are replicated and appended to the start of **x***ₖ* to obtain a time domain OFDM signal **x̃***ₖ* = [*xₖ*[*N - G*], ··· *, xₖ*[*N -* 1]*, xₖ*[0]*, xₖ*[1], ··· *, xₖ*[*N -* 1]]^{T}.

On a receive side, the OFDM signal is demodulated through inverse processing. It is assumed that time and frequency synchronization can be obtained and a CP length is sufficient. After a CP removal operation (that is, first *G* sample values in a received signal are removed), a data block that includes *N* sample values and that has no ISI is obtained, and the data block is also equivalent to a circular convolution of an OFDM symbol **x***ₖ* and a channel impulse response. The time domain circular convolution may be converted into frequency domain point multiplication through fast Fourier transform (fast Fourier transform, FFT), and channel equalization may be completed with low complexity by using frequency domain single-tap equalization.

### 2. DFT-s-OFDM modulation

A difference between DFT-s-OFDM modulation and OFDM modulation lies in that before an OFDM processing process, there is additional DFT processing, that is, an *M*-point DFT operation is performed on each data block ***s**ₖ* including *M* pieces of data. For details, refer to the dashed box in FIG. 2. If DFT processing is considered as precoding, DFT-s-OFDM modulation may be referred to as precoding OFDM modulation.

A DFT-s-OFDM signal exhibits a single-carrier characteristic and has a PAPR far lower than that of a multi-carrier signal such as an OFDM signal. Therefore, with same power amplification, DFT-s-OFDM can provide a higher output power and higher power amplification efficiency, to improve coverage and reduce energy consumption. Coverage and power consumption advantages of DFT-s-OFDM are especially significant on a terminal device side. Therefore, in existing LTE and NR versions, DFT-s-OFDM is applied to uplink transmission.

***s**ₖ* may include a modulated symbol and/or a redundant signal sample. The modulated symbol may be a modulated symbol obtained by performing bit modulation on an (encoded) bit stream. A modulation scheme may include pulse amplitude modulation (pulse amplitude modulation, PAM), phase shift keying (phase shift keying, PSK), quadrature amplitude modulation (quadrature amplitude modulation, QAM), offset quadrature amplitude modulation (offset quadrature amplitude modulation, OQAM), amplitude phase shift keying (amplitude phase shift keying, APSK), and the like.

The redundant signal sample may include a phase tracking reference signal (phase tracking reference signal, PTRS) sample, a unique word (unique word), zero, and the like.

### 3. Single-carrier (single carrier, SC) modulation

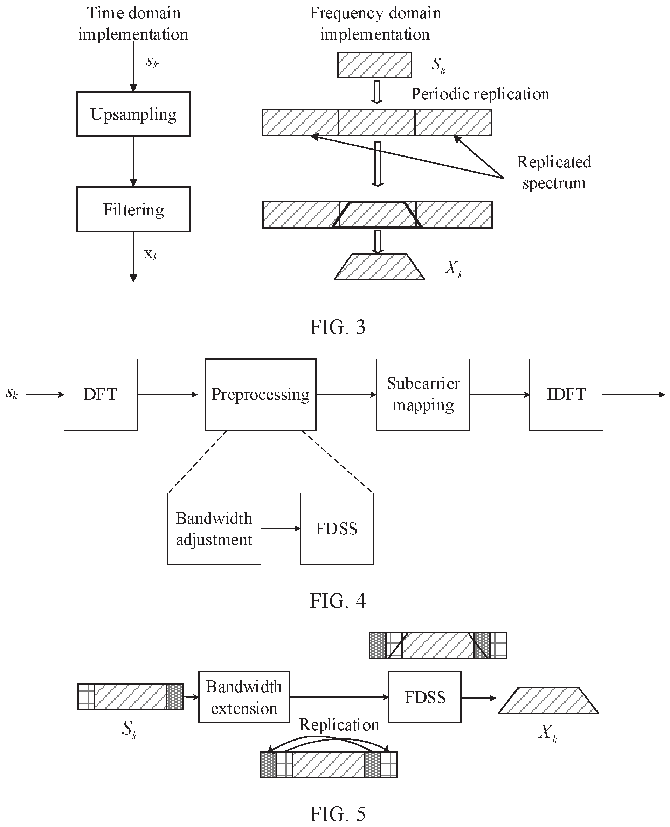

SC modulation is another type of symbol modulation described in embodiments of this application. FIG. 3 is a diagram of an SC modulation process and a frequency domain implementation of the process according to an embodiment of this application. A left side of FIG. 3 shows the SC modulation process, and shaping filtering is performed on ***s**ₖ* to generate a signal **x***ₖ*. Shaping filtering includes two processes: upsampling (upsampling) and filtering. Filtering may be implemented as a convolution of an upsampled signal and a shaping pulse (or filter coefficient). The convolution includes a linear convolution and a circular convolution.

***s**ₖ* includes a modulated symbol and/or a redundant signal sample. The modulated symbol may be a modulated symbol obtained by performing bit mapping on an (encoded) bit stream. As described above, a bit modulation scheme may include PAM, PSK, QAM, OQAM, APSK, and the like. The redundant signal sample may include a PTRS sample, a unique word, zero, and the like.

Time domain upsampling is equivalent to periodically replicating a spectrum (denoted as ***S**ₖ* in FIG. 3) corresponding to a data sequence in frequency domain, and a periodicity is a width of the spectrum corresponding to the data sequence. In addition, the time domain circular convolution corresponds to frequency domain point multiplication. A right side of FIG. 3 explains the two processes: upsampling and filtering from the perspective of the frequency domain. A rectangular grid with diagonal lines indicates the spectrum corresponding to the data sequence. A green trapezoid indicates a frequency response of a shaping pulse or a filter. In addition, in FIG. 3, it is assumed that a bandwidth of the filter is higher than a bandwidth of the data sequence.

Single-carrier modulation of the time domain circular convolution may also be equivalently implemented by using a frequency domain processing method. An implementation may be understood as DFT-s-OFDM modulation including frequency domain preprocessing. Specifically, FIG. 4 is a diagram of DFT-s-OFDM modulation including frequency domain preprocessing according to an embodiment of this application. First, a data sequence is transformed to the frequency domain through *M*-point DFT to obtain a frequency domain signal. For example, **S***ₖ* is obtained from **s***ₖ*. Then, a frequency domain signal 1 is processed in frequency domain, including frequency domain point multiplication (corresponding to filtering based on a time domain circular convolution, where frequency domain point multiplication may also be referred to as windowing or frequency domain spectrum shaping (frequency domain pulse shaping, FDSS) processing), to obtain a frequency domain signal 2. Finally, the frequency domain signal 2 is transformed to the time domain through subcarrier mapping and *N*-point IDFT. For example, **x***ₖ* is obtained from **X***ₖ*. If a bandwidth of a filter is not equal to a bandwidth of the frequency domain signal 1, or a quantity of subcarriers corresponding to the bandwidth of the filter (it should be understood that the quantity of subcarriers multiplied by a subcarrier spacing is equal to the bandwidth) is not equal to a quantity (that is, *M*) of data in the frequency domain signal 1, bandwidth adjustment needs to be performed on the frequency domain signal 1 before frequency domain point multiplication. An adjusted bandwidth is consistent with the bandwidth of the filter.

The corresponding frequency domain implementation on the right side of FIG. 3 is equivalent to bandwidth extension and FDSS shown in FIG. 5. FIG. 5 is a diagram of a bandwidth extension manner and FDSS according to an embodiment of this application. The bandwidth extension manner is that a signal in a tail part of **S***ₖ* is replicated to the front of **S***ₖ*, and a signal in a head part of **S***ₖ* is replicated to the back of **S***ₖ*. A signal output by a bandwidth adjustment module is used as an input of an FDSS module. An output of the FDSS module is equal to an input point multiplication FDSS coefficient. For example, a signal **S̃***ₖ* is obtained after bandwidth extension, an *i*^{th} value of the signal is *S̃ₖ*[*i*], an output signal of FDSS is **Ṡ***ₖ*, and an *i*^{th} value is *Ṡₖ*[*i*]*.* A relationship between *S̃ₖ*[*i*] and *Ṡₖ*[*i*] is as follows: ${\dot{S}}_{k} \left[i\right] = c \left[i\right] ⋅ {{S}^{˜}}_{k} \left[i\right]$

*c*[*i*] is an *i*^{th} FDSS coefficient.

By comparing FIG. 2 and FIG. 4, it can be learned that the DFT-s-OFDM modulation shown in FIG. 2 is a special case of the DFT-s-OFDM modulation shown in FIG. 4, that is, a case in which the bandwidth of the filter is equal to the bandwidth of the frequency domain signal 1 and the FDSS coefficient is 1 (that is, the frequency response of the filter is a rectangular window with an amplitude of 1).

### 4. Single-carrier frequency domain equalization (single-carrier frequency domain equalization, SC-FDE) modulation

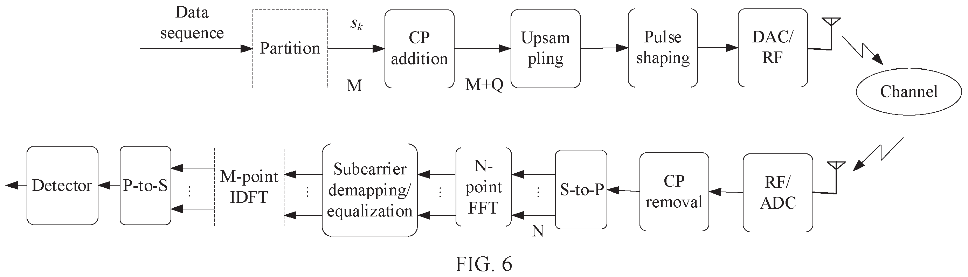

FIG. 6 is a block diagram of a single-carrier frequency domain equalization processing procedure according to an embodiment of this application. As shown in FIG. 6, in the SC-FDE processing procedure, based on SC modulation, a partition (partition) module first partitions a data sequence into a series of data blocks **s***ₖ* whose length is *M*. A CP whose length is *Q* is added to each data block, that is, last *Q* pieces of data of **s***ₖ* are replicated to the front of **s***ₖ*. Due to the CP, a linear convolution of a multipath channel is converted to a circular convolution, and then a receiver can use single-tap frequency domain channel equalization with low complexity.

5. $\frac{π}{2}$ - binary phase shift keying (binary phase shift keying, BPSK) modulation

$\frac{π}{2}$ - BPSK (which may also be represented as pi/2-BPSK) modulation mapping is used to map one bit to one $\frac{π}{2}$ - BPSK symbol. A mapping rule defined in 5G NR is as follows: $d \left(i\right) = \frac{{e}^{j \frac{π}{2} \left(imod2\right)}}{\sqrt{2}} \left[\left(1-2b\left(i\right)\right)+j\left(1-2b\left(i\right)\right)\right]$

*b*(*i*) represents an *i*^{th} bit, and *d*(*i*) represents an *i*^{th} $\frac{π}{2}$ - BPSK symbol. It can be learned that two adjacent $\frac{π}{2}$ - BPSK symbols in a $\frac{π}{2}$ - BPSK symbol sequence have only a 90-degree phase jump.

### 6. Roll-off (roll-off), spectrum extension factor (spectrum extension factor), and FDSS

As described above, the SC modulation process includes a pulse shaping phase. In a case of no transmission performance loss, a minimum bandwidth of a filter may be equal to a bandwidth of a symbol sequence (that is, a spectrum width of a frequency domain signal corresponding to a symbol). In this case, the filter has a rectangular window frequency response.

The filter with the rectangular window frequency response is difficult to implement. Therefore, in practice, roll-off is usually used to reduce difficulty in implementing the filter, but this increases a bandwidth and reduces spectral efficiency. Roll-off is steepness of a frequency response function with respect to a frequency. A roll-off factor is defined as follows: $β = \frac{increased bandwidth}{non - roll - off bandwidth} = \frac{extended bandwidth}{non - roll - off bandwidth} - 1$

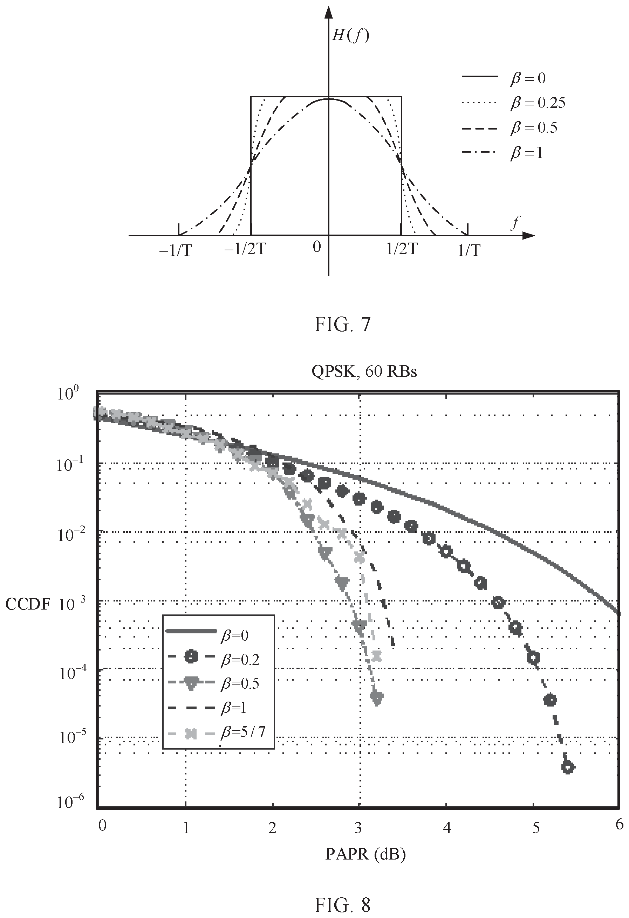

A non-roll-off bandwidth corresponds to a bandwidth when *β* = 0. FIG. 7 is a diagram in which a frequency response varies with a frequency for different roll-off factors according to an embodiment of this application. When β=0, there is a corresponding rectangular window frequency response. When *β* = 1, a bandwidth is doubled. When *β* = 0.5, a bandwidth increases by 50%. A larger value of *β* indicates lower steepness of the frequency response varying with the frequency and lower difficulty in implementing the filter, but has a higher requirement on the bandwidth.

In addition, regarding spectrum/bandwidth extension, the following spectrum/bandwidth extension factor (spectrum/bandwidth extension factor) exists: $\begin{matrix}spectrum / bandwidth extension factor = \frac{increased bandwidth}{extended bandwidth} = \\ \frac{β \times non - roll - off bandwidth}{\left(1+β\right) \times non - roll - off bandwidth} = \frac{β}{\left(1+β\right)}\end{matrix}$

For example, if *β* = 1, the spectrum/bandwidth extension factor is 0.5; or if *β* = 0.5, the spectrum/bandwidth extension factor is 1/3.

Further, FIG. 8 is a diagram of a PAPR of a quadrature phase shift keying (quadrature phase shift keying, QPSK) DFT-s-OFDM signal combined with FDSS according to an embodiment of this application. As shown in FIG. 8, PAPRs of the QPSK DFT-s-OFDM signal for different roll-off factors are shown. A horizontal axis represents the PAPR, a vertical axis represents a complementary cumulative distribution function (complementary cumulative distribution function, CCDF), and a signal after bandwidth extension occupies 720 subcarriers. An FDSS filter is a root-raised cosine function (which is a Nyquist filter) and has 720 coefficients. It can be learned that the PAPR is reduced through bandwidth extension and FDSS.

### 7. (I, jQ) single-carrier modulation

(I, jQ) single-carrier modulation means that an input of DFT-s-OFDM or SC modulation is a sequence in which a purely real number and a purely imaginary number appear alternately, that is, {*x*₀*, jy*₀*, x*₁, *jy*₁*,* ...} or {*jy*₀*, x*₀*, jy*₁*, x*₁, *...* }, where *xᵢ* and *yᵢ* are both real numbers. In this specification, {*x*₀*, jy*₀*, x*₁*, jy*₁*,* ...} or {*jy*₀*, x*₀*, jy*₁*, x*₁, ...} is referred to as an (I, jQ) sequence.

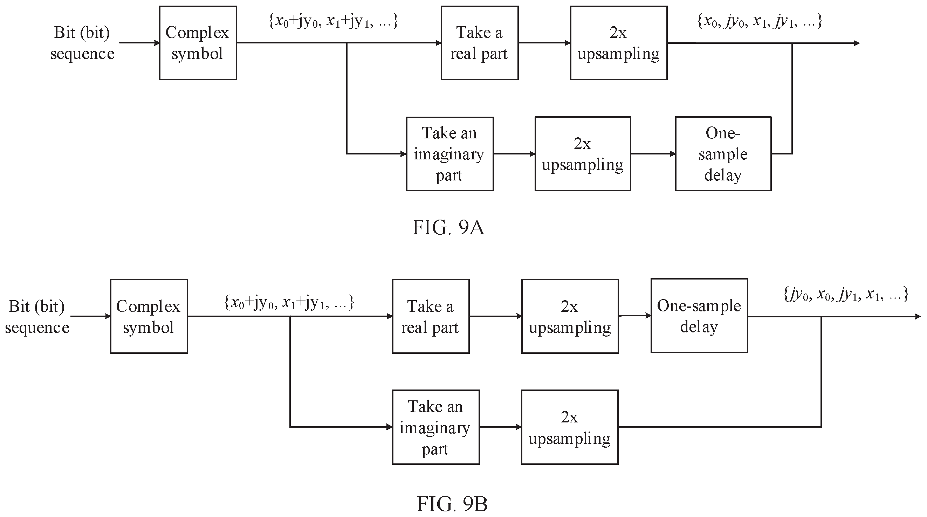

The (I, jQ) sequence may be obtained by splitting a complex constellation symbol in a two-dimensional plane. The complex constellation symbol includes QAM, PSK, APSK, a nonuniform constellation, and the like. For a splitting manner, refer to FIG. 9A and FIG. 9B. FIG. 9A and FIG. 9B are diagrams of splitting a complex constellation symbol according to an embodiment of this application. As shown in FIG. 9A, a sequence {*x*₀*, jy*₀*, x*₁*, jy*₁*, ...}* is generated in the splitting manner. As shown in FIG. 9A, a sequence {*jy*₀*, x*₀*, jy*₁*, x*₁, *...*} is generated in the splitting manner.

In the (I, jQ) sequence, because the purely real number and the purely imaginary number appear alternately, a phase difference between two adjacent symbols is 90 degrees. Same phase rotation is performed on each symbol in the (I, jQ) sequence, and a phase difference between two adjacent symbols is still 90 degrees.

It can also be learned that if the (I, jQ) sequence is obtained by splitting a QPSK sequence, a $\frac{π}{2}$ - BPSK symbol sequence may be considered as phase-rotated (I, jQ) modulation. A phase rotation value is $\frac{π}{4}$.

For (I, jQ) single-carrier modulation, when a same quantity of bits are carried, a length of an (I, jQ) modulated sequence is twice a length of a complex symbol sequence (where an element of the sequence is I+jQ). Theoretically, a quantity of resource elements (resource element, RE) needed for transmitting the (I, jQ) modulated sequence is twice a quantity of REs needed for transmitting the complex symbol sequence. However, a spectrum corresponding to the (I, jQ) modulated sequence has redundancy, for example, complex conjugate symmetry or other special properties of frequency domain signals on two frequencies. In a case of no demodulation performance loss, frequency domain redundancy may be removed, so that a minimum bandwidth needed for transmitting the (I, jQ) modulated sequence may be equal to a bandwidth needed for transmitting the complex symbol sequence, to improve spectral efficiency. Therefore, if a transmission bandwidth is lower than a bandwidth of the (I, jQ) sequence, or a quantity of subcarriers (where the quantity of subcarriers multiplied by a subcarrier spacing is equal to the bandwidth) included in the transmission bandwidth is less than the length of the (I, jQ) sequence, a bandwidth compression operation exists in (I, jQ) single-carrier modulation. In the conventional technologies, there is only bandwidth extension and no bandwidth compression.

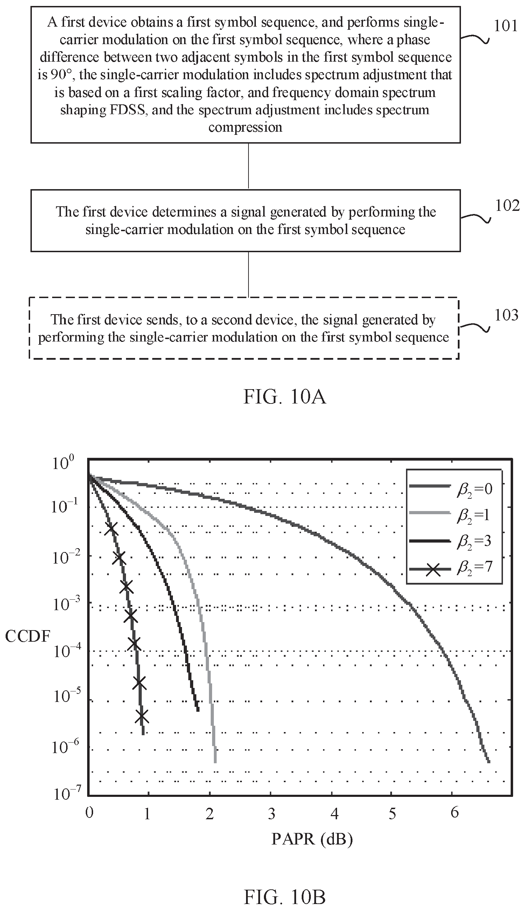

Based on this, FIG. 10A is a flowchart of a signal modulation method according to an embodiment of this application. As shown in FIG. 10A, the method includes the following steps.

101: A first device obtains a first symbol sequence, and performs single-carrier modulation on the first symbol sequence, where a phase difference between two adjacent symbols in the first symbol sequence is 90°, the single-carrier modulation includes spectrum adjustment that is based on a first scaling factor, and frequency domain spectrum shaping FDSS, and the spectrum adjustment includes spectrum compression.

The first symbol sequence in this embodiment of this application includes the (I, jQ) sequence described above and a phase rotation version thereof.

Optionally, the spectrum adjustment may also be referred to as bandwidth adjustment. Optionally, the spectrum compression may also be referred to as bandwidth compression.

The single-carrier modulation is performed on the first symbol sequence, where the single-carrier modulation may specifically be DFT-s-OFDM modulation or SC modulation (including SC-FDE). The spectrum adjustment and the FDSS in frequency domain correspond to the upsampling and filtering processes in time domain in FIG. 3. The spectrum adjustment that is based on the first scaling factor includes performing, based on the first scaling factor, spectrum extension or spectrum compression on a frequency domain signal corresponding to the first symbol sequence. A length of the frequency domain signal after the spectrum adjustment is the same as a quantity of FDSS coefficients, or a bandwidth of the frequency domain signal after the spectrum adjustment is the same as a transmission bandwidth. The frequency domain signal after the spectrum adjustment is used as an input of an FDSS module to generate an output signal of the FDSS module.

In this process, the first scaling factor needs to be determined. The first scaling factor may be determined in one of the following manners:
(1) The first scaling factor is determined based on a bandwidth of the first symbol sequence and a transmission bandwidth of a signal.

Specifically, the first scaling factor may be determined according to a formula below: ${β}_{1} = \frac{transmission bandwidth of the signal}{bandwidth of the first symbol sequence} - 1$

Alternatively, the first scaling factor may be determined according to a formula below: ${α}_{1} = \frac{transmission bandwidth of the signal - bandwidth of the first symbol sequence}{transmission bandwidth of the signal}$

*β*₁ and *α*₁ each represent the first scaling factor. The transmission bandwidth of the signal is a transmission bandwidth corresponding to the output signal of the FDSS module, or is a transmission bandwidth of a signal generated by performing the single-carrier modulation on the first symbol sequence. The bandwidth of the first symbol sequence is a spectrum width of the frequency domain signal corresponding to the first symbol sequence.

When the bandwidth of the first symbol sequence is higher than the transmission bandwidth of the signal, the spectrum compression may be performed on the frequency domain signal corresponding to the first symbol sequence.

When the bandwidth of the first symbol sequence is lower than the transmission bandwidth of the signal, the spectrum extension may be performed on the frequency domain signal corresponding to the first symbol sequence.

When the bandwidth of the first symbol sequence is equal to the transmission bandwidth of the signal, no processing may be performed on the frequency domain signal corresponding to the first symbol sequence, that is, the spectrum extension or the spectrum compression is not performed.

The bandwidth may be represented by a bandwidth unit, for example, Hertz (Hz). Alternatively, the bandwidth may be converted into a quantity of subcarriers. Specifically, quantity of subcarriers=bandwidth/subcarrier spacing. One resource block (resource block, RB) includes 12 subcarriers, and the bandwidth may alternatively be represented by a quantity of RBs. The frequency domain signal corresponding to the first symbol sequence may be obtained through DFT, and a quantity of frequency domain data included in the frequency domain signal is equal to a length of the first symbol sequence. One subcarrier carries one piece of frequency domain data, and the bandwidth of the first symbol sequence may be calculated by multiplying the length of the first symbol sequence by the subcarrier spacing. Conversely, the quantity of data included in the frequency domain signal corresponding to the first symbol sequence, a quantity of symbols in the first symbol sequence, or the length of the first symbol sequence may be determined based on the bandwidth of the first symbol sequence. Therefore, Formula (4) above may also be equivalently represented as Formula (6) below: ${β}_{1} = \frac{quantity of subcarriers occupied by the output signal of the FDSS}{quantity of symbols in the first symbol sequence} - 1$

Correspondingly, Formula (5) above may also be equivalently represented as Formula (7) below: $\begin{matrix}{α}_{1} = \\ \frac{quantity of subcarriers occupied by the output signal of the FDSS - quantity of symbols in the first symbol sequence}{quantity of subcarriers occupied by the output signal of the FDSS}\end{matrix}$

Values of *β*₁ and *α*₁ include the following meanings:

When the spectrum extension or the spectrum compression is not performed on the frequency domain signal corresponding to the first symbol sequence, *β*₁ = 0 or *α*₁ = 0.

When the spectrum extension (or the bandwidth extension) is performed on the frequency domain signal corresponding to the first symbol sequence, *β*₁ > 0 or *α*₁ > 0.

When the spectrum compression (or the bandwidth compression) is performed on the frequency domain signal corresponding to the first symbol sequence, -0.5 ≤ *β*₁ < 0 or -1 ≤ *α*₁ < 0.

Because the frequency domain signal of the first symbol sequence has a maximum of half redundancy, that is, a maximum of 50% redundancy can be removed through the bandwidth compression, with reference to Formula (6) and Formula (7), it may be deduced that minimum values of *β*₁ and *α*₁ may be -0.5 and -1 respectively.

A possible maximum value of *β*₁ may be 0. Correspondingly, a possible maximum value of *α*₁ is also 0. The transmission bandwidth of the signal corresponds to once the bandwidth of the first symbol sequence.

Alternatively, a possible maximum value of *β*₁ may be 1. Correspondingly, a possible maximum value of *α*₁ is 0.5. The transmission bandwidth of the signal corresponds to twice the bandwidth of the first symbol sequence.

Alternatively, a possible maximum value of *β*₁ may be 3. Correspondingly, a possible maximum value of *α*₁ may be 0.75. The transmission bandwidth of the signal corresponds to four times the bandwidth of the first symbol sequence.

A larger value of *β*₁ may indicate a lower PAPR of a single-carrier signal generated based on the first symbol sequence with reference to the FDSS.

(2) The first scaling factor is determined based on half a bandwidth of the first symbol sequence and a transmission bandwidth of a signal.

Specifically, the first scaling factor may be determined according to a formula below: $β = \frac{transmission bandwidth of the signal}{half the bandwidth of the first symbol sequence} - 1$

Alternatively, the first scaling factor may be determined according to a formula below: $α = \frac{transmission bandwidth of the signal - half the bandwidth of the first symbol sequence}{transmission bandwidth of the signal}$

*β* and *α* each represent the first scaling factor. Consistent with the foregoing descriptions, the transmission bandwidth of the signal is a transmission bandwidth corresponding to the output signal of the FDSS module, or is a transmission bandwidth of a signal generated by performing the single-carrier modulation on the first symbol sequence. The bandwidth of the first symbol sequence is a spectrum width of the frequency domain signal corresponding to the first symbol sequence. A bandwidth of a non-redundant part in the frequency domain signal corresponding to the first symbol sequence is equal to half the bandwidth of the first symbol sequence. Therefore, Formula (8) and Formula (9) are defined based on a redundancy-free bandwidth of the first symbol sequence. Similarly, the bandwidth in Formula (8) and Formula (9) may be represented by a bandwidth unit, or may be converted into a quantity of subcarriers or a quantity of symbols.

Values of *β* and *α* include the following meanings:

When the spectrum extension or the spectrum compression is not performed on the frequency domain signal corresponding to the first symbol sequence, *β* = 1 or *α* = 0.5.

When the spectrum extension is performed on the frequency domain signal corresponding to the first symbol sequence, *β* > 1 or *α* > 0.5.

When the spectrum compression is performed on the frequency domain signal corresponding to the first symbol sequence, 0 ≤ *β* < 1 or 0 ≤ *α* < 0.5, that is, minimum values of *β* and *α* are both 0.

A possible maximum value of *β* may be 1. Correspondingly, a maximum value of *α* may be 0.5. The transmission bandwidth of the signal corresponds to once the bandwidth of the first symbol sequence. In this case, it indicates that the frequency domain signal corresponding to the first symbol sequence is not adjusted.

Alternatively, a possible maximum value of *β* may be 3. Correspondingly, a maximum value of *α* may be 0.75. The transmission bandwidth of the signal corresponds to twice the bandwidth of the first symbol sequence. In other words, a maximum of 2x bandwidth extension is performed on the frequency domain signal corresponding to the first symbol sequence.

Alternatively, a possible maximum value of *β* may be 7. Correspondingly, a maximum value of *α* may be 0.875. The transmission bandwidth of the signal corresponds to four times the bandwidth of the first symbol sequence. In other words, a maximum of 4x bandwidth extension is performed on the frequency domain signal corresponding to the first symbol sequence.

Further, FIG. 10B is a diagram of PAPRs corresponding to different first scaling factors according to an embodiment of this application. As shown in FIG. 10B, PAPRs of DFT-s-OFDM signals that carry a first symbol sequence when *β* is 0, 1, 3, and 7 respectively are provided. It can be seen that as *β* increases or a bandwidth extension degree increases, a PAPR becomes lower.

Similarly, it can be learned that when *β*₁ is values 1 and 3 respectively, bandwidth extension can also achieve a good effect in reducing the PAPR.

It can be learned that in this embodiment of this application, descriptions of spectrum adjustment in a scenario in which the bandwidth compression is performed on the first symbol sequence based on the first scaling factor are added, so that corresponding single-carrier modulation in a case in which the bandwidth of the first symbol sequence is higher than the transmission bandwidth of the signal is resolved. In addition, in the foregoing two manners of determining the first scaling factor, in the former manner, the first scaling factor may be directly obtained through calculation based on the transmission bandwidth and the bandwidth of the first symbol sequence, to facilitate calculation. As mentioned above, the first symbol sequence may be obtained by splitting a QAM symbol sequence. When a same quantity of bits are carried, the redundancy-free bandwidth of the first symbol sequence is the same as a bandwidth of the QAM symbol sequence. Therefore, when the latter manner is used, a network side may indicate the first scaling factor by using existing signaling or an existing field or protocol indicating a bandwidth extension factor of the QAM symbol sequence (for example, the protocol defines that the bandwidth extension factor of the QAM symbol sequence is $\frac{transmission bandwidth}{bandwidth of the QAM symbol sequence} - 1$ or $\frac{transmission bandwidth - bandwidth of the QAM symbol sequence}{transmission bandwidth}$), to reduce protocol modification content. Finally, the proposed maximum and minimum values of the first scaling factor can achieve a good trade-off between the PAPR and spectral efficiency of the single-carrier signal that carries the first symbol sequence.

The first device in this embodiment of this application may be a network device. When the first device is a network device, after determining the transmission bandwidth (or a scheduling bandwidth) of the signal and the bandwidth (or the length) of the first symbol sequence, the first device may obtain the first scaling factor through calculation, modulate the first symbol sequence based on the first scaling factor, and send a modulated signal. In addition, a second device (terminal device) receives the signal.

Optionally, when the first device is a network device, the method further includes: The first device sends a first message, where the first message carries at least two of transmission bandwidth information of the signal, length information of the first symbol sequence, or information about the first scaling factor.

Optionally, when the first device is a terminal device, the method further includes: receiving the first message.

Optionally, the first message is one of the following: downlink control information (downlink control information, DCI), radio resource control (radio resource control, RRC) signaling, or a medium access control (medium access control, MAC) control element (control element, CE).

When the first device is a network device, the first device may further send at least two of the transmission bandwidth information, for example, a quantity of physical RBs included in the transmission bandwidth, the length information of the first symbol sequence, for example, a quantity of symbols included in the first symbol sequence, or the information about the first scaling factor to the terminal device by using the first message, so that the terminal device demodulates a related symbol sequence based on the first scaling factor and the length of the first symbol sequence.

The length information of the first symbol sequence may be used to obtain bandwidth information of the first symbol sequence.

In this case, the terminal device may be the second device, and is configured to receive the first message; and determine the information about the first scaling factor and the length of the first symbol sequence based on at least two of the transmission bandwidth information, the length (or bandwidth) information of the first symbol sequence, or the information about the first scaling factor carried in the first message, so that the terminal device obtains the first symbol sequence through demodulation.

Optionally, the method further includes: The first device receives the first message. In this case, the first device is a terminal device.

Correspondingly, the second device sends the first message. In this case, the second device is a network device. The terminal device determines the information about the first scaling factor and the length of the first symbol sequence based on at least two of the transmission bandwidth information, the length (or bandwidth) information of the first symbol sequence, or the information about the first scaling factor carried in the first message; and then performs single-carrier modulation on the first symbol sequence to generate a single-carrier signal, and sends the single-carrier signal to the second device. Interaction logic between the network device and the terminal device is the same as that described above, and details are not described herein again.

In this process, the network device may indicate any two parameters in the transmission bandwidth of the signal, the length (bandwidth) information of the first symbol sequence, and the first scaling factor to the terminal device by using the first message, to reduce sending of related signaling. The network device may further indicate, to the terminal device, a specific manner of determining the first scaling factor, so that a transmit side and a receive side can modulate and demodulate a signal in a corresponding manner. In addition, the network device and the terminal device may further pre-agree on or determine, according to a protocol, a specific manner of determining the first scaling factor, to reduce signaling overheads.

In addition, the first message is sent by using the DCI, and sending of the first message may be triggered on demand, to ensure message sending flexibility. Alternatively, the first message is sent by using the RRC signaling, to reduce signaling overheads. Alternatively, the first message is sent by using the MAC CE, to further reduce signaling overheads.

After the first scaling factor is obtained, the spectrum adjustment may be performed based on the first scaling factor, and then the FDSS is performed. First, it is assumed that the frequency domain signal whose length is M is obtained by performing M-point DFT on the first symbol sequence whose length is M. Then, the spectrum adjustment and the FDSS are performed in the following manner:
(1) When the first scaling factor is determined based on the bandwidth of the first symbol sequence

An example in which the first scaling factor is *β*₁ is used for description. First, M-point DFT is performed on the first symbol sequence to obtain a first frequency domain signal whose length is M, and the first frequency domain signal is replicated c1 times to obtain a second frequency domain signal whose length is (c1+1)*M. A value of c1 is related to a value (range) of *β*₁. For example, if 0 < *β*₁ ≤ 1, c1=1; or if 1 < *β*₁ ≤ 3, c1=3. M may be a power of 2, 3, or 5.

Then, *M*(1 *+ β*₁) (representing M times 1+*β*₁, where an explanation manner of a similar expression hereinafter is the same as this, and details are not described again) sample values in the middle of the second frequency domain signal are used as an input signal of FDSS, and the FDSS is performed according to Formula (1) above, to obtain an output signal of the FDSS. A bandwidth of the output signal of the FDSS is the same as the transmission bandwidth of the (single-carrier) signal generated through the single-carrier modulation.

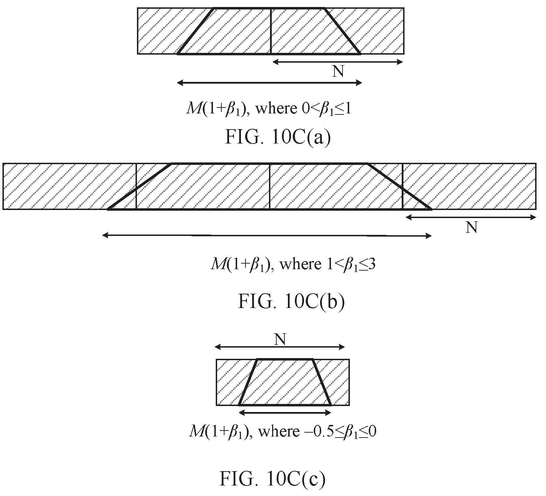

FIG. 10C(a) to FIG. 10C(c) are diagrams of an FDSS process according to an embodiment of this application. FIG. 10C(a) shows bandwidth extension and FDSS when 0 < *β*₁ ≤ 1, or FIG. 10C(b) shows bandwidth extension and FDSS when 1 < *β*₁ ≤ 3. In the figures, a trapezoid is an example of the FDSS, and a single rectangle is an example of a first frequency domain signal (whose length is M).

As described above, a value of *β*₁ may alternatively be -0.5 ≤ *β*₁ ≤ 0. In this case, a frequency domain signal does not need to be replicated. It may be understood that if -0.5 ≤ *β*₁ ≤ 0, c1=0. M(1 + *β*₁) sample values in the middle of the first frequency domain signal whose length is M are directly used as an input signal of the FDSS, and the FDSS is performed according to Formula (1) above, to obtain an output signal of the FDSS. As shown in FIG. 10C(c), the trapezoid is an example of the FDSS.

### (2) When the first scaling factor is determined based on half the bandwidth of the first symbol sequence

An example in which the first scaling factor is *β* is used for description. First, M-point DFT is performed on the first symbol sequence to obtain a first frequency domain signal whose length is M, and the first frequency domain signal is replicated c times to obtain a third frequency domain signal whose length is (c1+1)*M. A value of c is related to a value (range) of *β*. If 1 < *β* ≤ 3, c=1; or if 3 < *β* ≤ 7, c=3. M is also the length of the first symbol sequence, and M may be a power of 2, 3, or 5.

Then, $\frac{M}{2} \left(1+β\right)$ sample values in the middle of the frequency domain signal whose length is (c+1)*M are used as an input signal of FDSS, and the FDSS is performed according to Formula (1) above, to obtain an output signal of the FDSS.

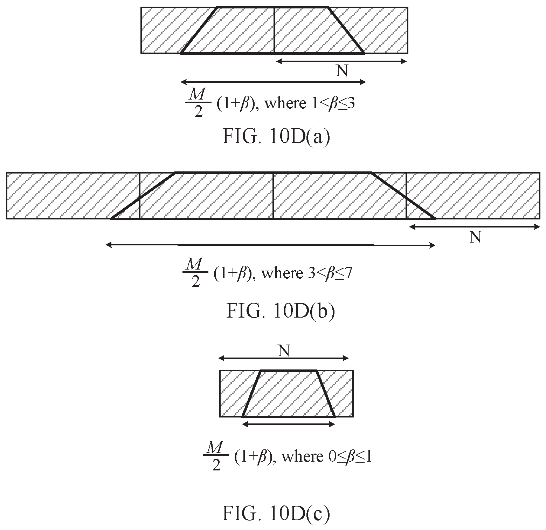

FIG. 10D(a) to FIG. 10D(c) are diagrams of an FDSS process according to an embodiment of this application. FIG. 10D(a) shows bandwidth extension and FDSS when 1 < *β* ≤ 3, or FIG. 10D(b) shows bandwidth extension and FDSS when 3 < *β* ≤ 7. In the figures, a trapezoid is an example of the FDSS, and a single rectangle is an example of a first frequency domain signal.

As described above, a value of *β* may alternatively be 0 ≤ *β* ≤ 1. In this case, a frequency domain signal does not need to be replicated. It may be understood that if 0 ≤ *β* ≤ 1, c=0. $\frac{M}{2} \left(1+β\right)$ sample values in the middle of the first frequency domain signal whose length is M are directly used as an input of the FDSS, and the FDSS is performed according to Formula (1) above. As shown in FIG. 10D(c), the trapezoid is an example of the FDSS.

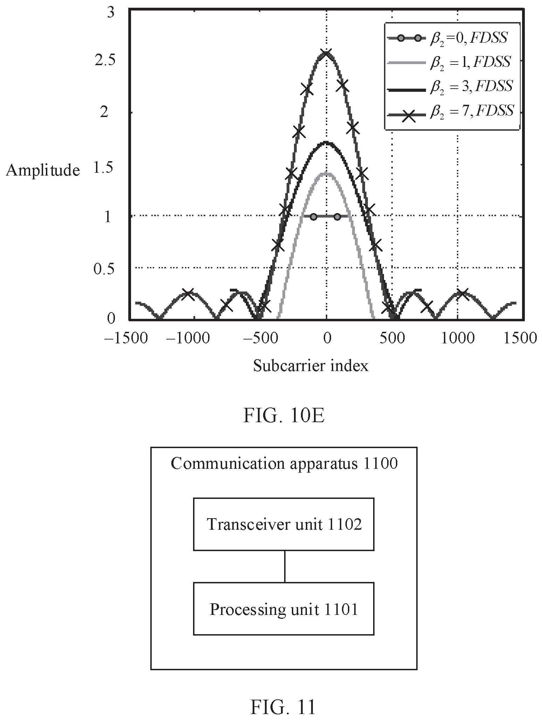

Further, FIG. 10E is a diagram of PAPRs corresponding to different first scaling factors according to an embodiment of this application. As shown in FIG. 10E, FDSS shapes used when *β* are 0, 1, 3, and 7 respectively are provided. When *β* = 0 (bandwidth compression), an FDSS filter coefficient is a rectangular window. When *β* = 1 (no bandwidth compression or compression), an FDSS filter coefficient is a root-raised cosine function.

It can be learned that in this embodiment of this application, spectrum adjustment is performed by using the method, to be specific, a signal whose length is M*(1+*β*₁) or M/2*(1+*β*) is generated based on a frequency domain signal whose length is M and that corresponds to the first symbol sequence, and is used as an input of FDSS, so that during bandwidth compression, it is ensured that a redundant signal is compressed, a wanted signal is not compressed, and signal demodulation performance is lossless. In addition, such an FDSS input signal design enables the generated single-carrier modulated signal to have the low PAPR.

102: The first device determines a signal generated by performing the single-carrier modulation on the first symbol sequence.

After the output signal of the FDSS is obtained, subcarrier mapping, IDFT, and the like may be performed on the output signal of the FDSS. For details, refer to the DFT-s-OFDM modulation process in FIG. 2. Further, radio frequency signal processing may be performed on the output signal of the FDSS to obtain a transmitted signal.

It can be learned that in this embodiment of this application, a manner of determining the first scaling factor corresponding to the first symbol sequence is provided, and descriptions of spectrum adjustment in a scenario in which bandwidth compression is performed based on the first scaling factor on the first symbol sequence in which the phase difference between the two adjacent symbols is 90° are added, to improve frequency efficiency, and generate a single-carrier signal with a low PAPR.

In an optional example, this application may further include the following step.

103: The first device sends, to the second device, the signal generated by performing the single-carrier modulation on the first symbol sequence. Correspondingly, the second device receives the signal, and obtains the first symbol sequence based on demodulation corresponding to the single-carrier modulation process of the first symbol sequence.

In an optional example, the first symbol sequence is a second symbol sequence or a third symbol sequence. The second symbol sequence is the first symbol sequence including only a pilot. The second symbol sequence is mutually known to the first device and the second device. The third symbol sequence is the first symbol sequence including communication data.

When the first symbol sequence is a second symbol sequence, single-carrier modulation is performed on the second symbol sequence to obtain a demodulation reference signal (demodulation reference signal, DMRS). When the first symbol sequence is a third symbol sequence, single-carrier modulation is performed on the third symbol sequence to obtain a data signal. A bandwidth of the second symbol sequence is the same as a bandwidth of the third symbol sequence, and transmission bandwidths allocated to the DMRS and the data signal are also the same. Correspondingly, a first scaling factor of the second symbol sequence is also the same as a first scaling factor of the third symbol sequence, and the same single-carrier modulation is performed on the second symbol sequence and the third symbol sequence, to obtain corresponding single-carrier signals. For a specific modulation process, refer to the foregoing descriptions. Details are not described herein again.

Further, the second symbol sequence is a $\frac{π}{2}$-BPSK symbol sequence.

The DMRS and the data signal are in one scheduling periodicity. The second device completes channel estimation based on the received DMRS and the local second symbol sequence, and is configured to equalize and demodulate the received data signal, to obtain the third symbol sequence.

In the foregoing embodiment, same single-carrier modulation is performed on a pilot symbol and a data symbol, so that a PAPR of the DMRS is not higher than a PAPR of the data signal. In this way, accurate channel estimation can be obtained from the DMRS, to ensure demodulation performance of the data signal.

FIG. 11 is a diagram of a structure of a communication apparatus. An embodiment of this application further provides a communication apparatus 1100. The communication apparatus 1100 may be a terminal device or a network device, or may be used for but is not limited to the terminal device or the network device. The communication apparatus 1100 includes a processing unit 1101. The processing unit 1101 may be or may be deployed in a processor.

The processing unit 1101 is configured to obtain a first symbol sequence, and perform single-carrier modulation on the first symbol sequence, where a phase difference between two adjacent symbols in the first symbol sequence is 90°, the single-carrier modulation includes spectrum adjustment that is based on a first scaling factor, and frequency domain spectrum shaping FDSS, and the spectrum adjustment includes spectrum compression.

The processing unit 1101 is further configured to determine a signal generated by performing the single-carrier modulation on the first symbol sequence.

Optionally, the first scaling factor is determined based on a bandwidth of the first symbol sequence and a transmission bandwidth of the signal.

Optionally, the first scaling factor satisfies a formula below: ${β}_{1} = \frac{transmission bandwidth of the signal}{bandwidth of the first symbol sequence} - 1 ;$ or
the first scaling factor satisfies a formula below: ${α}_{1} = \frac{transmission bandwidth of the signal - bandwidth of the first symbol sequence}{transmission bandwidth of the signal} ,$ where
*β*₁ and *α*₁ each represent the first scaling factor.

Optionally, the first scaling factor satisfies a formula below: $β = \frac{transmission bandwidth of the signal}{half the bandwidth of the first symbol sequence} - 1 ;$ or
the first scaling factor satisfies a formula below: $α = \frac{transmission bandwidth - half the bandwidth of the first symbol sequence}{transmission bandwidth of the signal} ,$ where
*β* and *α* each represent the first scaling factor.

Optionally, the first scaling factor satisfies a first condition below:
a maximum value of *β* is 1, 3, or 7; or
a maximum value of *α* is 0.5, 0.75, or 0.875; or
a minimum value of *β* is 0; or
a minimum value of *α* is 0.

Optionally, the first scaling factor satisfies a second condition below:
a maximum value of *β*₁ is 0, 1, or 3; or
a maximum value of *α*₁ is 0, 0.5, or 0.75; or
a minimum value of *β*₁ is -0.5; or
a minimum value of *α*₁ is -1.

Optionally, the spectrum adjustment that is based on the first scaling factor, and the FDSS include:
the spectrum adjustment that is based on the first scaling factor, and the FDSS include: replicating, c times, a first frequency domain signal corresponding to the first symbol sequence, to obtain a second frequency domain signal whose length is (c+1)*M, where a value of c is related to a value of *β*, and M is a length of the first frequency domain signal; and performing the FDSS by using M/2*(1+*β*) sample values in the middle of the second frequency domain signal as an input signal of the FDSS, to obtain an output signal of the FDSS.

Optionally, the spectrum adjustment that is based on the first scaling factor, and the FDSS include: replicating, c1 times, a first frequency domain signal corresponding to the first symbol sequence, to obtain a third frequency domain signal whose length is (c1+1)*M, where a value of c1 is related to a value of *β*₁, and M is a length of the first frequency domain signal; and performing the FDSS by using M*(1+*β*₁) sample values in the middle of the third frequency domain signal as an input signal of the FDSS, to obtain an output signal of the FDSS.

Optionally, the first symbol sequence is a second symbol sequence or a third symbol sequence, the second symbol sequence is the first symbol sequence including only a pilot, the third symbol sequence is the first symbol sequence including communication data, a demodulation reference signal DMRS is a signal generated by performing the single-carrier modulation on the second symbol sequence, a data signal is a signal generated by performing the single-carrier modulation on the third symbol sequence, a transmission bandwidth of the DMRS is the same as a transmission bandwidth of the data signal, and a bandwidth of the second symbol sequence is equal to a bandwidth of the third symbol sequence.

Optionally, the second symbol sequence is a pi/2-binary phase shift keying (pi/2-BPSK) symbol sequence.

Optionally, the method further includes: receiving a first message or sending the first message, where the first message carries at least two of transmission bandwidth information, length information of the first symbol sequence, or information about the first scaling factor.

Optionally, the first message is one of the following: downlink control information DCI, radio resource control RRC signaling, or a medium access control-control element MAC-CE.

Optionally, the communication apparatus 11000 may further include a transceiver unit 1102, configured to receive and send a signal with another device. The transceiver unit 1102 may be or may be deployed in a unit or a module that can implement information receiving and sending functions, for example, a transceiver, a transceiver antenna, or an input/output interface.

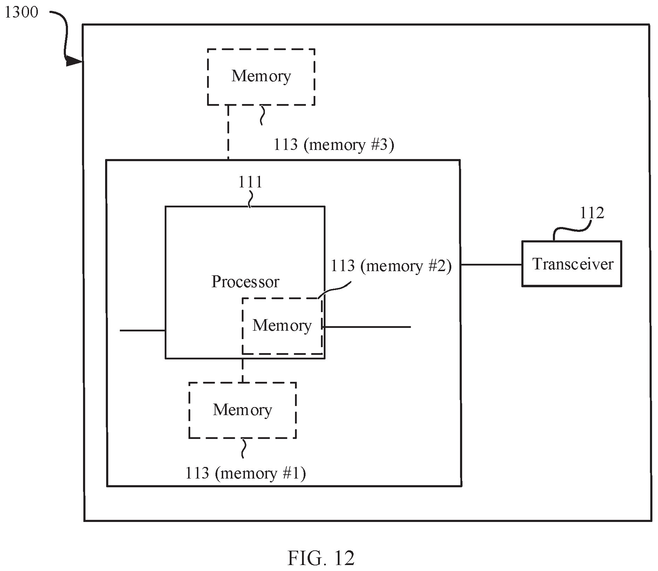

FIG. 12 is a diagram of a hardware structure of a communication apparatus 1300 according to an embodiment of this application. For a structure of the communication apparatus 1100, refer to the structure shown in FIG. 12. The communication apparatus 1300 includes a processor 111 and a transceiver 112. The processor 111 and the transceiver 112 are electrically coupled.

The processor 111 is configured to execute a part or all of computer program instructions in a memory. When the part or all of the computer program instructions are executed, the apparatus is enabled to perform the method in any one of the foregoing embodiments.

The transceiver 112 is configured to communicate with another device. For example, a first device sends, to a second device, a transmitted-signal spectrum corresponding to a first symbol sequence on which single-carrier modulation is performed.

Optionally, the apparatus further includes a memory 113, configured to store computer program instructions. Optionally, the memory 113 (a memory #1) is located inside the apparatus, the memory 113 (a memory #2) is integrated with the processor 111, or the memory 113 (a memory #3) is located outside the apparatus.

It should be understood that the communication apparatus 1300 shown in FIG. 9A and FIG. 9B may be a chip or a circuit, for example, a chip or a circuit that may be disposed in a terminal apparatus or a communication apparatus. The transceiver 112 may alternatively be a communication interface. The transceiver includes a receiver and a transmitter. Further, the communication apparatus 1300 may include a bus system.

The processor 111, the memory 113, and the transceiver 112 are connected through the bus system. The processor 111 is configured to execute the instructions stored in the memory 113, to control the transceiver to receive a signal and send a signal, and complete steps of a transmit side or a receive side in the implementation method in this application. The memory 113 may be integrated into the processor 111, or may be disposed separately from the processor 111.

In an implementation, it may be considered that a function of the transceiver 112 may be implemented by a transceiver circuit or a dedicated transceiver chip. It may be considered that the processor 111 is implemented by a dedicated processing chip, a processing circuit, a processor, or a general-purpose chip. The processor may be a central processing unit (central processing unit, CPU), a network processor (network processor, NP), or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

It may be further understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application aims to include but is not limited to these memories and any memory of another proper type.

An embodiment of this application provides a computer storage medium, storing a computer program. The computer program includes instructions for performing the method applied to the first device or the second device in the foregoing embodiments.

An embodiment of this application provides a computer program product including instructions. When the computer program product runs on a computer, the computer is enabled to perform the method applied to the first device or the second device in the foregoing embodiments.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal modulation method, wherein the method comprises:
obtaining a first symbol sequence, and performing single-carrier modulation on the first symbol sequence, wherein a phase difference between two adjacent symbols in the first symbol sequence is 90°, the single-carrier modulation comprises spectrum adjustment that is based on a first scaling factor, and frequency domain spectrum shaping FDSS, and the spectrum adjustment comprises spectrum compression; and
determining a signal generated by performing the single-carrier modulation on the first symbol sequence.

2. The method according to claim 1, wherein the first scaling factor is determined based on a bandwidth of the first symbol sequence and a transmission bandwidth of the signal.

3. The method according to claim 2, wherein the first scaling factor satisfies a formula below: $β = \frac{transmission bandwidth of the signal}{half the bandwidth of the first symbol sequence} - 1 ;$ or
the first scaling factor satisfies a formula below: $α = \frac{transmission bandwidth of the signal - half the bandwidth of the first symbol sequence}{transmission bandwidth of the signal} ,$ wherein
*β* and *α* each represent the first scaling factor.

4. The method according to claim 3, wherein the first scaling factor satisfies a first condition below:
a maximum value of *β* is 1, 3, or 7; or
a maximum value of *α* is 0.5, 0.75, or 0.875; or
a minimum value of *β* is 0; or
a minimum value of *α* is 0.

5. The method according to any one of claims 1 to 4, wherein the spectrum adjustment that is based on the first scaling factor, and frequency domain spectrum shaping FDSS comprise:
replicating, c times, a first frequency domain signal corresponding to the first symbol sequence, to obtain a second frequency domain signal whose length is (c+1)*M, wherein a value of c is related to a value of *β*, and M is a length of the first frequency domain signal; and
performing the FDSS by using M/2*(1+*β*) sample values in the middle of the second frequency domain signal as an input signal of the FDSS, to obtain an output signal of the FDSS.

6. The method according to any one of claims 1 to 5, wherein the first symbol sequence is a second symbol sequence or a third symbol sequence, the second symbol sequence is the first symbol sequence comprising only a pilot, the third symbol sequence is the first symbol sequence comprising communication data, a demodulation reference signal DMRS is a signal generated by performing the single-carrier modulation on the second symbol sequence, a data signal is a signal generated by performing the single-carrier modulation on the third symbol sequence, a transmission bandwidth of the DMRS is the same as a transmission bandwidth of the data signal, and a bandwidth of the second symbol sequence is equal to a bandwidth of the third symbol sequence.

7. The method according to claim 6, wherein the second symbol sequence is a pi/2-binary phase shift keying (pi/2-BPSK) symbol sequence.

8. The method according to any one of claims 1 to 7, wherein when the method is applied to a terminal device, the method further comprises: receiving a first message, wherein the first message carries at least two of transmission bandwidth information of the signal, length information of the first symbol sequence, or information about the first scaling factor; or
when the method is applied to a network device, the method further comprises: sending the first message.

9. The method according to claim 8, wherein the first message is one of the following: downlink control information DCI, radio resource control RRC signaling, or a medium access control-control element MAC-CE.

10. A communication apparatus, wherein the apparatus comprises a unit configured to perform the method according to any one of claims 1 to 9.

11. A communication device, comprising a processor, wherein the processor is configured to perform the method according to any one of claims 1 to 9.

12. A computer-readable storage medium, wherein the computer-readable storage medium comprises instructions, and when the instructions are run, the method according to any one of claims 1 to 9 is implemented.

13. A computer program product, wherein the computer program product comprises instructions, and when the instructions are run, the method according to any one of claims 1 to 9 is implemented.
